# EUROPÄISCHE PATENTSCHRIFT

(11) **EP 2 294 293 B1**
(45) Veröffentlichungstag und Bekanntmachung des Hinweises auf die Patenterteilung: **05.12.2012**
(21) Anmeldenummer: 09761546.2
(22) Anmeldetag: 22.04.2009
(51) Int. Cl.: F01N 3/20, B01D 53/94

(54) **VERFAHREN ZUR NACHBEHANDLUNG DES ABGASES EINER BRENNKRAFTMASCHINE**
METHOD FOR THE AFTERTREATMENT OF THE EXHAUST GAS OF AN INTERNAL COMBUSTION ENGINE
PROCEDE DE POST-TRAITEMENT DES GAZ D'ECHAPPEMENT D'UN MOTEUR A COMBUSTION INTERNE

(30) Priorität: 11.06.2008 DE 102008002357
(43) Veröffentlichungstag der Anmeldung: 16.03.2011
(73) Patentinhaber: Robert Bosch GmbH, 70442 Stuttgart (DE)
(72) Erfinder: HAEBERER, Rainer, 75015 Bretten (DE); FRITZ, Manfred, 74321 Bietigheim-Bissingen (DE)
(86) Internationale Anmeldenummer: PCT/EP2009/054787
(87) Internationale Veröffentlichungsnummer: WO 2009/149983

(56) Entgegenhaltungen:
- EP-A- 1 884 772
- WO-A-2004/042208
- WO-A-2006/013229
- DE-A1-102005 059 250
- JP-A- 9 294 913
- US-A- 5 252 308

## Beschreibung

### Stand der Technik

Die Erfindung geht aus von einem Verfahren zur Nachbehandlung des Abgases einer Brennkraftmaschine nach der Gattung des unabhängigen Anspruchs.

Bei Kraftfahrzeugen mit Verbrennungsmotor muss aufgrund der in den nächsten Jahren anstehenden verschärften Abgasgesetzgebung unter anderem der Schadstoff Stickoxid reduziert werden. Eine hierbei zur Anwendung kommende Methode ist das Verfahren der selektiven katalytischen Reduktion, bei dem der Schadstoff Stickoxid unter Zuhilfenahme eines beispielsweise flüssigen Reduktionsmittels zu Stickstoff und Wasser reduziert wird. Das Reduktionsmittel wird in einer Leitung von einem Vorratsbehälter zu einem Dosiermodul befördert. Bei Nutzfahrzeugen hat sich die Verwendung einer wässrigen, eutektischen Lösung von Harnstoff in Wasser (AdBlue^{™}) mit einem Gehalt von 32,5 Gew.-% Harnstoff, einem Gefrierpunkt von -11°C und einem Ammoniakbildungspotential von 0,2 kg/kg als Ammoniakvorläufersubstanz durchgesetzt. Da auch bei tiefen Temperaturen die Schadstoffe entfernt werden müssen, muss bei entsprechenden Umgebungstemperaturen dieses Reduktionsmittel gegebenenfalls aufgetaut werden, wozu eine Tankheizung und ein entsprechendes Heiz- bzw. Auftaukonzept erforderlich sind.

Es ist ferner bekannt, durch Zusatz von Ammoniumformiat zur Lösung von Harnstoff in Wasser den Gefrierpunkt deutlich abzusenken. Eine Lösung von 26,2% Ammoniumformiat und 20,1% Harnstoff in Wasser besitzt beispielsweise einen Gefrierpunkt von - 30 Grad Celsius und ist kommerziell unter der Bezeichnung Denoxium-30 verfügbar (siehe hierzu die im Internet über den Verweis http:///www.dieselnet.com/tech/cat scr.html abrufbare Information). Dort ist ebenfalls die Verwendung von Ammoniak, Ammoniakwasser oder einer Harnstofflösung als Reduktionsmittel beschrieben.

Aus der EP1561016 ist es bekannt, ein flüssiges Hilfsmittel zur Abgasnachbehandlung zeitweise einer teilweisen chemischen Umwandlung in einen den Gefrierpunkt der Flüssigkeit absenkenden Stoff zu unterwerfen, wenn die Temperatur der Flüssigkeit einen kritischen Wert unterschreitet Hierbei kann durch Erhitzen der Flüssigkeit im Tank eine Gefrierpunktabsenkung um 10 bis 30 Kelvin erzielt werden, indem Bestandteile von AdBlue durch die Wärmezufuhr teilweise in im Wasseranteil des AdBlue gelöstes Ammoniak umgewandelt werden, so dass sich im Tank eine Mischung von wässriger Harnstofflösung mit in Wasser gelöstem freiem Ammoniak befindet, die einen niedrigeren Gefrierpunkt aufweist als frische, noch keiner Wärmebehandlung unterzogene wässrige Harnstofflösung.

Die WO 2006/013229 beschreibt die Verwendung von Ammoniumformiat als Reduktionsmittel bei der Abgasnachbehandlung.

Die DE 102005059250 offenbart als Ammoniakvorläufersubstanz eine Mischung von Methanamid und Wasser.

### Offenbarung der Erfindung

Das erfindungsgemäße Verfahren mit den kennzeichnenden Merkmalen des unabhängigen Anspruchs hat demgegenüber den Vorteil einer erhöhten Gefrierresistenz, ohne nachteilige Folgen hinsichtlich der mechanischen Langzeitstabilität bzw. Funktionstüchtigkeit der verwendeten, grundsätzlich korrosionsanfälligen mechanischen Konstruktionen in Kauf nehmen zu müssen, wie es bei der Verwendung von Ammoniumformiat als gefrierpunktabsenkendem Stoff der Fall wäre, welches in Verbindung mit Luft und bei erhöhten Temperaturen aggressive Ameisensäure bildet, welche zu massiven Schädigungen insbesondere abgasnaher Komponenten wie dem Dosierventil führen würde. Als weiterer Vorteil ist anzusehen, dass gegebenenfalls eine Tankheizung zum Auftauen des Reduktionsmittels gänzlich entfallen kann, weil keine Betriebssituationen mehr eintreten können, in denen das Reduktionsmittel gefriert. Eine vorgesehene On-Board-Diagnose kann diesbezüglich auch vereinfacht und damit kostengünstiger ausgeführt werden. Weiterhin ist vorteilhaft, dass keine Schädigungen des Vorratsbehälters infolge eines bei tiefen Temperaturen im Tank sich einstellenden Eisdrucks mehr zu erwarten sind. Dies führt des Weiteren zu einer möglichen Vielfalt an Tankgeometrien, angepasst an die jeweiligen Platzverhältnisse bzw. gestaltungstechnischen Erfordernisse beim Kraftfahrzeugbau, weil der Tank nicht mehr mit der Bedingung konstruiert sein muss, ein gerichtetes und damit für die Tankwand möglichst belastungsarmes Gefrieren einer darin enthaltenen Flüssigkeit zu gewährleisten. Des Weiteren ist das grundsätzlich nutzbare Tankvolumen bei gegebener Tankgeometrie größer als ohne die gefrierpunktabsenkende Maßnahme, weil kein Freivolumen mehr für die Ausdehnung im Falle eines Gefrierens mehr vorgehalten werden muss - bislang werden je nach Tankform im Tank bis zu 40 Prozent Luftraum unter anderem für die Ausdehnung des Adblue vorgesehen. Durch die erfindungsgemäße Vorgehensweise reicht nunmehr ein Freiraum von zirka 10 Prozent. Dadurch erhöht sich auch die Reichweite einer Füllung eines Reduktionsmittelvorratsbehälters.

Besonders vorteilhaft ist es hierbei, als Reduktionsmittel eine wässrige Harnstofflösung zu verwenden und diese derart und ohne Zugabe chemisch wesentlich verschiedener Stoffe zu modifizieren, dass sich ein gefrierpunktabsenkender Effekt ergibt Dadurch erzielt man in einfacher Weise eine Gefrierresistenz ohne gesteigertes Korrosionspotential, weil die chemische Umgebung bei der Abgasnachbehandlung im Wesentlichen die gleiche bleibt wie beim Einsatz einer reinen AdBlue-Lösung.

Des Weiteren ist es vorteilhaft, freies Ammoniak als gefrierpunktabsenkenden Stoff einzusetzen. Das in Wasser gelöste freie Ammoniak wirkt nicht nur gefrierpunktabsenkend, sondern stellt eine weitere reduktionsaktive Komponente beispielsweise in einer modifizierten wässrigen Harnstofflösung dar, das heisst die im Abgastrakt erzielbare Ammoniakausbeute pro Liter Harnstofflösung erhöht sich gegenüber Adblue, was nochmals zu einer größeren Reichweite einer Tank- bzw. Reduktionsmittelkartuschenfüllung führt. Alternativ kann der Vorratsbehälter bzw. die auswechselbare Kartusche kleiner dimensioniert werden.

Durch die in den abhängigen Ansprüchen und in der Beschreibung aufgeführten Maßnahmen sind vorteilhafte Weiterbildungen und Verbesserungen des im unabhängigen Anspruch angegebenen Verfahrens möglich.

### Kurze Beschreibung der Zeichnungen

Ausführungsbeispiele der Erfindung sind in der Zeichnung dargestellt und in der nachfolgenden Beschreibung näher erläutert.

Es zeigen
- Figur 1: eine Abgasnachbehandlung unter Verwendung eines gefrierpunktabgesenkten Reduktionsmittels und
- Figur 2: eine alternative Vorgehensweise unter Verwendung einer mit einem gefrierpunktabgesenktem Reduktionsmittel befüllten, auswechselbaren Reduktionsmittelkartusche.

### Ausführungsformen der Erfindung

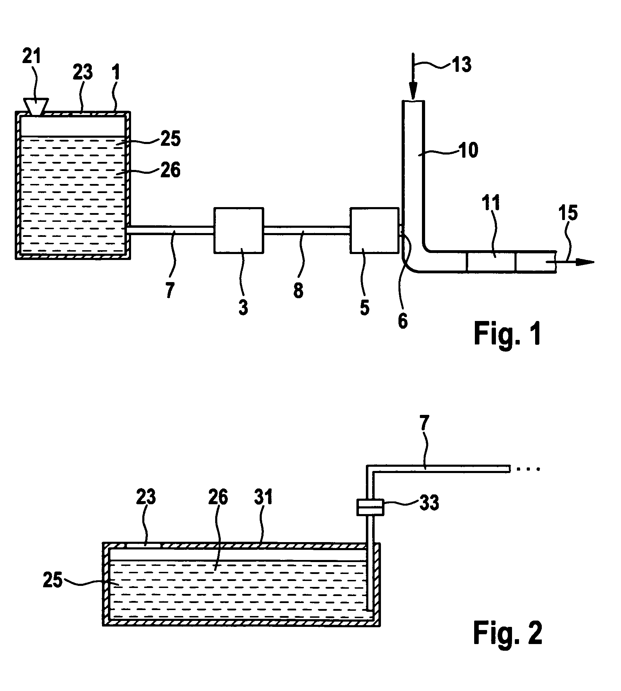

Figur 1 zeigt einen Vorratsbehälter bzw. Tank 1 für ein Reduktionsmittel zur selektiven katalytischen Reduktion von Stickoxiden, der fest mit nachgeordneten Komponenten einer Abgasnachbehandlungsanlage einer Brennkraftmaschine eines Kraftfahrzeugs verbunden ist Die im Tank als flüssiges Reduktionsmittel 25 enthaltene wässrige Harnstofflösung ist mit im Wasseranteil der Harnstofflösung gelöstem freien Ammoniak als gefrierpunktabsenkenden Stoff 26 versetzt. Diese Mischung von wässriger Harnstofflösung mit in Wasser gelöstem freien Ammoniak bestand als solche bereits, bevor sie über die verschließbare Tanköffnung 21 in den Tank gefüllt wurde. Eine in einem oberen Bereich des Tanks eingerichtete Belüftungsöffnung 23 stellt einen Druckausgleich zur äußeren Umgebung bei Reduktionsmittelentnahme über die nachfolgend beschriebenen Komponenten sicher. Der Tank 1 ist über eine Reduktionsmittelleitung 7 mit einem eine Pumpe bzw. eine Dosierpumpe enthaltenden Fördermodul 3 verbunden; ausgangsseitig wird das Reduktionsmittel vom Fördermodul über eine weitere Reduktionsmittelleitung 8 zu einem Dosiermodul 5 weitergeleitet. Die Reduktionsmittelleitung 7 kann im Wesentlichen auch entfallen, wenn das Fördermodul 3 im Bereich des Tanks, beispielsweise auf dem Tankdeckel bzw. dem oberen Bereich des Tanks, oder innerhalb des Tanks, angeordnet ist. Das Dosiermodul 5 kann ein elektrisch ansteuerbares Dosierventil enthalten oder auch als ausschließlich druckgesteuerte Düse ausgeführt sein. Die Dosieröffnung 6 des Dosiermoduls 5 mündet in eine Abgasleitung 10, in die das Reduktionsmittel bedarfsweise eingespritzt wird. Die Abgasleitung 10 führt von einer Brennkraftmaschine ausgestossenes Abgas 13, nachdem es mit dem Reduktionsmittel versetzt worden ist, zu einem Katalysator 11 zur selektiven katalytischen Reduktion. Hinter dem Katalysator 11 gelangt das gereinigte Abgas 15 über nicht näher dargestellte weitere Abgasnachbehandlungskomponenten, wie beispielsweise einen Schalldämpfer, ins Freie.

Das bereits bei Befüllung des Tanks 1 im Reduktionsmittel 25 enthaltene in Wasser gelöste freie Ammoniak 26 senkt den Gefrierpunkt im Vergleich zum handelsüblichen "Adblue" ab. Hierzu wird beispielsweise von den Reduktionsmittelherstellern ein zusätzlicher Herstellungsschritt in Form der Zugabe freien Ammoniaks bzw. der Zugabe in Wasser gelösten freien Ammoniaks als "Additiv" und anschließenden gleichmässigen Vermischung mit der Harnstofflösung vorgesehen. Je nach Menge bzw. Konzentration des Additivs kann der Gefrierpunkt individuell eingestellt werden. Diese fertige Mischung wird den Tankstellen, den Kraftfahrzeugführern bzw. den Werkstätten zur weiteren Verwendung und Einfüllung in den Tank 1 bereitgestellt.

Alternativ zur Vermischung des Additivs mit "Adblue" kann auch vorgesehen sein, eine im Vergleich zu "AdBlue" konzentriertere Harnstofflösung (also vergleichsweise mehr Harnstoff enthaltende Lösung) als Grundlage zur Vermischung mit Ammoniakwasser zu verwenden, beispielsweise mit Ammoniakwasser mit 20 Prozent gelöstem Ammoniak. Bei 12 Prozent freiem Ammoniak in einer wässrigen Harnstofflösung sinkt der Gefrierpunkt von - 11 Grad Celsius auf - 28 Grad Celsius.

Alternativ kann die weiterentwickelte gefrierpunktabgesenkte wässrige Harnstofflösung hergestellt werden, indem eine wässrige Harnstofflösung, beispielsweise das in seiner Zusammensetzung normierte AdBlue, vor der Abgabe an die Tankstellen bzw. Werkstätten erhitzt wird auf eine Temperatur über 60 Grad Celsius, jedoch unterhalb 100 Grad Celsius, um eine teilweise chemische Umwandlung des Harnstoffanteils der wässrigen Lösung in im Wasseranteil gelöstes Ammoniak anzuregen. Hierbei ist es insbesondere vorteilhaft, diese thermische Anregung vor der Befüllung des im Kraftfahrzeug eingebauten Tanks in einem Mass zu betreiben, die den normalen Zerfall des Harnstoffs in Ammoniak im Rahmen der üblichen Lagerung des AdBlue übersteigt. In "altem" AdBlue liegt zum Beispiel ein bis zu 5 volumenprozentiger Anteil an im Wasseranteil gelöstem Ammoniak vor. Um das Hilfsmittel bzw. Reduktionsmittel mit dem gefrierpunktabsenkenden Stoff zu versetzen, wird die thermische Anregung bei dieser alternativen Vorgehensweise vorzugsweise so lange betrieben, bis ein 7 bis 20 volumenprozentiger Ammoniakanteil vorliegt, beispielsweise ein 7 bis 15 volumenprozentiger Anteil, insbesondere ein 12 volumenprozentiger Anteil. In einer weiteren Alternative kann die Versetzung mit gefrierpunktabsenkendem Stoff auch dadurch erfolgen, dass durch gezieltes Erhitzen stark gealtertes Ad Blue definiert einem Reduktionsmittel, also dem "frischen", handelsüblichen AdBlue zugegeben wird, bis der im Vergleich zum Gefrierpunkt des handelsüblichen AdBlue gewünschte abgesenkte Gefrierpunkt eingestellt ist. Anschließend wird die fertige Mischung in Tanks bzw. Kartuschen eingefüllt.

Figur 2 zeigt ein Detail einer Abgasnachbehandlungsanordnung, bei der anstelle eines fest eingebauten Tanks 1 gemäß Figur 1 das Fördermodul 3 über die Reduktionsmittelleitung 7 mit einer auswechselbaren, mit gefrierpunktabgesenktem Reduktionsmittel 25 befüllten Reduktionsmittelkartusche 31 verbunden ist. Hierzu ist eine Anschlussstelle 33 vorgesehen, über die der Kraftfahrzeugführer die bisher angeschlossene Kartusche bei Nachschubbedarf mit einer gefüllten, neuen Kartusche austauschen kann. In diesem Beispiel sind die käuflich erhältlichen Kartuschen mit bereits gefrierpunktabgesenktem Reduktionsmittel befüllt.

## Patentansprüche

1. Verfahren zur Nachbehandlung des Abgases einer Brennkraftmaschine, insbesondere einer Brennkraftmaschine eines Kraftfahrzeugs, bei dem ein flüssiges Hilfsmittel (25) zur Nachbehandlung in einem Vorratsbehälter (1, 31) gespeichert, bedarfsweise mittels Entnahmemitteln (3, 5, 7, 8) aus dem Vorratsbehälter entnommen und abgasführenden Bereichen (10) der Brennkraftmaschine zugeführt wird, **dadurch gekennzeichnet, dass** das Hilfsmittel (25) bereits vor dem Zeitpunkt eines Befüllens des Vorratsbehälters (1) mit dem Hilfsmittel (25) beziehungsweise im Falle einer auswechselbaren Kartusche (31) als Vorratsbehälter vor dem Zeitpunkt der Verbindung des Vorratsbehälters (31) mit den Entnahmemitteln (3, 5, 7, 8) mit einem gefrierpunktabsenkenden Stoff (26) versetzt ist, wobei der gefrierpunktabsenkende Stoff (26) keine korrosive Wirkung auf die Entnahmemittel (3, 5, 7, 8) hat, welche stärker ist als eine korrosive Wirkung des Hilfsmittels (25) auf die Entnahmemittel (3, 5, 7, 8), wobei das Hilfsmittel (25) ein Reduktionsmittel zur Reduktion von Stickoxiden oder eine Vorläufersubstanz des Reduktionsmittels enthält, wobei das Hilfsmittel (25) Harnstoff als Vorläufersubstanz des Reduktionsmittels enthält, wobei das Hilfsmittel (25) eine wässrige Lösung ist, wobei als gefrierpunktabsenkender Stoff (26) freies Ammoniak eingesetzt wird, wobei das Ammoniak in der wässrigen Lösung gelöst ist und wobei das Gewichtsverhältnis von Wasser, Harnstoff und Ammoniak so gewählt ist, dass der Gefrierpunkt gegenüber dem Gefrierpunkt einer für Kraftfahrzeuge handelsüblichen wässrigen Harnstofflösung (AdBlue) um mindestens 10 Kelvin abgesenkt ist.

2. Verfahren nach Anspruch 1, **dadurch gekennzeichnet, dass** die wässrige Lösung eine 7 bis 20 volumenprozentige, vorzugsweise eine 7 bis 15 volumenprozentige, insbesondere eine 12 volumenprozentige, Lösung von freiem Ammoniak als gefrierpunktabsenkendem Stoff in dem Hilfsmittel bildet

3. Verfahren nach Anspruch 1, **dadurch gekennzeichnet, dass** der Gefrierpunkt um 10 bis 30 Kelvin abgesenkt ist.

4. Verfahren nach einem der vorhergehenden Ansprüche, **dadurch gekennzeichnet, dass** vor dem Befüllen des Vorratsbehälters (1) mit dem Hilfsmittel bzw. vor dem Zeitpunkt der Verbindung des Vorratsbehälters (31) mit den Entnahmemitteln das Hilfsmittel (25) mit dem gefrierpunktabsenkenden Stoff (26) vermischt wird.

5. Verfahren nach Anspruch 4, **dadurch gekennzeichnet, dass** die Vermischung durch Zugabe des gefrierpunktabsenkenden Stoffs (26) in Form von in Wasser gelöstem freien Ammoniak, beispielsweise in Form von Ammoniakwasser, erfolgt.

6. Verfahren nach Anspruch 5, **dadurch gekennzeichnet, dass** als Hilfsmittel (25) eine für Kraftfahrzeuge handelsübliche wässrige Harnstofflösung (AdBlue) oder eine gegenüber einer solchen handelsüblichen Lösung einen kleineren Wasseranteil aufweisende wässrige Harnstofflösung verwendet wird.

7. Verfahren nach einem der vorhergehenden Ansprüche, **dadurch gekennzeichnet, dass** vor dem Befüllen des Vorratsbehälters (1) mit dem Hilfsmittel (25) bzw. vor dem Zeitpunkt der Verbindung des Vorratsbehälters (31) mit den Entnahmemitteln das Hilfsmittel (25) erhitzt wird, so dass sich ein Teil des Hilfsmittels (25) in den gefrierpunktabsenkenden Stoff (26) umwandelt.

8. Verfahren nach einem der vorhergehenden Ansprüche, **dadurch gekennzeichnet, dass** die abgasführenden Bereiche (10) einen Katalysator (11) zur selektiven katalytischen Reduktion von Stickoxiden enthalten.

9. Verfahren nach einem der vorhergehenden Ansprüche, **dadurch gekennzeichnet, dass** die Entnahmemittel (3, 5, 7, 8) mindestens eine Reduktionsmittelleitung (8) und ein Dosiermodul (5) umfassen.

10. Verfahren zur Herstellung eines gefrierpunktabgesenkten (26) flüssigen Hilfsmittels (25) zur Verwendung in einem Verfahren zur Nachbehandlung des Abgases einer Brennkraftmaschine nach einem der vorhergehenden Ansprüche, **dadurch gekennzeichnet, dass** das Hilfsmittel (25) bereits vor dem Zeitpunkt eines Befüllens des Vorratsbehälters (1) mit dem Hilfsmittel (25) beziehungsweise im Falle einer auswechselbaren Kartusche (31) als Vorratsbehälter vor dem Zeitpunkt der Verbindung des Vorratsbehälters (31) mit den Entnahmemitteln (3, 5, 7, 8) mit einem gefrierpunktabsenkenden Stoff (26) versetzt wird, wobei der gefrierpunktabsenkende Stoff (26) keine korrosive Wirkung auf die Entnahmemittel (3, 5, 7, 8) hat, welche stärker ist als eine korrosive Wirkung des Hilfsmittels (25) auf die Entnahmemittel (3, 5, 7, 8), wobei das Hilfsmittel (25) ein Reduktionsmittel zur Reduktion von Stickoxiden oder eine Vorläufersubstanz des Reduktionsmittels enthält, wobei das Hilfsmittel (25) Harnstoff als Vorläufersubstanz des Reduktionsmittels enthält, wobei das Hilfsmittel (25) eine wässrige Lösung ist, wobei als gefrierpunktabsenkender Stoff (26) freies Ammoniak eingesetzt wird, wobei das Ammoniak In der wässrigen Lösung gelöst ist und wobei das Gewichtsverhältnis von Wasser, Harnstoff und Ammoniak so gewählt ist, dass der Gefrierpunkt gegenüber dem Gefrierpunkt einer für Kraftfahrzeuge handelsüblichen wässrigen Harnstofflösung (AdBlue) um mindestens 10 Kelvin abgesenkt ist.

## Claims

1. Method for the aftertreatment of the exhaust gas of an internal combustion engine, in particular of an internal combustion engine of a motor vehicle, in which method a liquid auxiliary medium (25) for aftertreatment is stored in a reservoir (1, 31), extracted from the reservoir as required by extraction means (3, 5, 7, 8), and supplied to exhaust-gas-conducting regions (10) of the internal combustion engine, **characterized in that**, already before the time at which the reservoir (1) is filled with the auxiliary medium (25), or in the case of an exchangeable cartridge (31) as a reservoir, before the time at which the reservoir (31) is connected to the extraction means (3, 5, 7, 8), the auxiliary medium (25) has mixed with it a freezing-point-lowering substance (26), wherein the freezing-point-lowering substance (26) does not have a corrosive effect on the extraction means (3, 5, 7, 8) which is more intense than a corrosive effect of the auxiliary medium (25) on the extraction means (3, 5, 7, 8), wherein the auxiliary medium (25) comprises a reducing agent for the reduction of nitrogen oxides or a precursor substance of the reducing agent, wherein the auxiliary medium (25) comprises urea as a precursor substance of the reducing agent, wherein the auxiliary medium (25) is an aqueous solution, wherein free ammonia is used as a freezing-point-lowering substance (26), wherein the ammonia is dissolved in the aqueous solution, and wherein the weight ratio of water, urea and ammonia is selected such that the freezing point is lowered by at least 10 Kelvin relative to the freezing point of an aqueous urea solution (AdBlue) commercially available for motor vehicles.

2. Method according to Claim 1, **characterized in that** the aqueous solution forms a 7 to 20 percent by volume, preferably a 7 to 15 percent by volume, in particular a 12 percent by volume solution of free ammonia, as a freezing-point-lowering substance, in the auxiliary medium.

3. Method according to Claim 1, **characterized in that** the freezing point is lowered by 10 to 30 Kelvin.

4. Method according to one of the preceding claims, **characterized in that** the auxiliary medium (25) is mixed with the freezing-point-lowering substance (26) before the reservoir (1) is filled with the auxiliary medium or before the time at which the reservoir (31) is connected to the extraction means.

5. Method according to Claim 4, **characterized in that** the mixing is realized by addition of the freezing-point-lowering substance (26) in the form of free ammonia dissolved in water, for example in the form of ammonia water.

6. Method according to Claim 5, **characterized in that** an aqueous urea solution (AdBlue) commercially available for motor vehicles, or an aqueous urea solution which has a lower water fraction than such a commercially available solution, is used as auxiliary medium (25).

7. Method according to one of the preceding claims, **characterized in that**, before the reservoir (1) is filled with the auxiliary medium (25), or before the time at which the reservoir (31) is connected to the extraction means, the auxiliary medium (25) is heated such that a part of the auxiliary medium (25) changes into the freezing-point-lowering substance (26).

8. Method according to one of the preceding claims, **characterized in that** the exhaust-gas-conducting regions (10) comprise a catalytic converter (11) for the selective catalytic reduction of nitrogen oxides.

9. Method according to one of the preceding claims, **characterized in that** the extraction means (3, 5, 7, 8) comprise at least one reducing agent line (8) and one dosing module (5).

10. Method for producing a freezing-point-lowering (26) liquid auxiliary medium (25) for use in a method for the aftertreatment of the exhaust gas of an internal combustion engine according to one of the preceding claims, **characterized in that**, already before the time at which the reservoir (1) is filled with the auxiliary medium (25), or in the case of an exchangeable cartridge (31) as a reservoir, before the time at which the reservoir (31) is connected to the extraction means (3, 5, 7, 8), the auxiliary medium (25) has mixed with it a freezing-point-lowering substance (26), wherein the freezing-point-lowering substance (26) does not have a corrosive effect on the extraction means (3, 5, 7, 8) which is more intense than a corrosive effect of the auxiliary medium (25) on the extraction means (3, 5, 7, 8), wherein the auxiliary medium (25) comprises a reducing agent for the reduction of nitrogen oxides or a precursor substance of the reducing agent, wherein the auxiliary medium (25) comprises urea as a precursor substance of the reducing agent, wherein the auxiliary medium (25) is an aqueous solution, wherein free ammonia is used as a freezing-point-lowering substance (26), wherein the ammonia is dissolved in the aqueous solution, and wherein the weight ratio of water, urea and ammonia is selected such that the freezing point is lowered by at least 10 Kelvin relative to the freezing point of an aqueous urea solution (AdBlue) commercially available for motor vehicles.

## Revendications

1. Procédé de post-traitement des gaz d'échappement d'un moteur à combustion interne, en particulier d'un moteur à combustion interne d'un véhicule automobile, dans lequel un additif liquide (25) pour le post-traitement est stocké dans un réservoir (1, 31), est extrait du réservoir au besoin par le biais de moyens de prélèvement (3, 5, 7, 8) et est acheminé à des régions conduisant les gaz d'échappement (10) du moteur à combustion interne, **caractérisé en ce que** l'additif (25), déjà avant l'instant d'un remplissage du réservoir (1) avec l'additif (25), ou, dans le cas d'une cartouche remplaçable (31) servant de réservoir, avant l'instant de la connexion du réservoir (31) aux moyens de prélèvement (3, 5, 7, 8), est mélangé à une substance (26) abaissant le point de congélation, la substance (26) abaissant le point de congélation n'ayant aucun effet corrosif sur les moyens de prélèvement (3, 5, 7, 8) qui soit plus fort qu'un effet corrosif de l'additif (25) sur les moyens de prélèvement (3, 5, 7, 8), l'additif (25) contenant un agent réducteur pour réduire les oxydes d'azote ou une substance précurseur de l'agent réducteur, l'additif (25) contenant de l'urée en tant que substance précurseur de l'agent réducteur, l'additif (25) étant une solution aqueuse, de l'ammoniac libre étant utilisé comme substance (26) abaissant le point de congélation, l'ammoniac étant dissous dans la solution aqueuse et le rapport pondéral d'eau, d'urée et d'ammoniac étant choisi de telle sorte que le point de congélation soit abaissé d'au moins 10 Kelvin par rapport au point de congélation d'une solution d'urée aqueuse (AdBlue) usuelle dans le commerce pour les véhicules automobiles.

2. Procédé selon la revendication 1, **caractérisé en ce que** la solution aqueuse forme une solution de 7 à 20 pour cent en volume, de préférence de 7 à 15 pour cent en volume, notamment de 12 pour cent en volume, d'ammoniac libre en tant que substance abaissant le point de congélation dans l'additif.

3. Procédé selon la revendication 1, **caractérisé en ce que** le point de congélation est abaissé de 10 à 30 Kelvin.

4. Procédé selon l'une quelconque des revendications précédentes, **caractérisé en ce qu'**avant le remplissage du réservoir (1) avec l'additif ou avant l'instant de la connexion du réservoir (31) aux moyens de prélèvement, l'additif (25) est mélangé avec la substance (26) abaissant le point de congélation.

5. Procédé selon la revendication 4, **caractérisé en ce que** le mélange s'effectue avec ajout de la substance (26) abaissant le point de congélation sous la forme d'ammoniac libre dissous dans de l'eau, par exemple sous forme d'eau ammoniacale.

6. Procédé selon la revendication 5, **caractérisé en ce que** l'on utilise comme additif (25) une solution d'urée aqueuse (AdBlue) usuelle dans le commerce pour les véhicules automobiles, ou une solution d'urée aqueuse présentant une moindre proportion d'eau par rapport à une telle solution usuelle dans le commerce.

7. Procédé selon l'une quelconque des revendications précédentes, **caractérisé en ce qu'**avant le remplissage du réservoir (1) avec l'additif (25), ou avant l'instant de la connexion du réservoir (31) aux moyens de prélèvement, l'additif (25) est chauffé, de telle sorte qu'une partie de l'additif (25) se transforme en la substance (26) abaissant le point de congélation.

8. Procédé selon l'une quelconque des revendications précédentes, **caractérisé en ce que** les régions (10) conduisant les gaz d'échappement contiennent un catalyseur (11) pour la réduction catalytique sélective des oxydes d'azote.

9. Procédé selon l'une quelconque des revendications précédentes, **caractérisé en ce que** les moyens de prélèvement (3, 5, 7, 8) comprennent au moins une conduite d'agent réducteur (8) et un module de dosage (5).

10. Procédé de préparation d'un additif liquide (25) à point de congélation abaissé (26) pour l'utilisation dans un procédé de post-traitement des gaz d'échappement d'un moteur à combustion interne selon l'une quelconque des revendications précédentes, **caractérisé en ce que** l'additif (25), déjà avant l'instant d'un remplissage du réservoir (1) avec l'additif (25), ou, dans le cas d'une cartouche remplaçable (31) servant de réservoir, avant l'instant de la connexion du réservoir (31) aux moyens de prélèvement (3, 5, 7, 8), est mélangé à une substance (26) abaissant le point de congélation, la substance (26) abaissant le point de congélation n'ayant aucun effet corrosif sur les moyens de prélèvement (3, 5, 7, 8) qui soit plus fort qu'un effet corrosif de l'additif (25) sur les moyens de prélèvement (3, 5, 7, 8), l'additif (25) contenant un agent réducteur pour réduire les oxydes d'azote ou une substance précurseur de l'agent réducteur, l'additif (25) contenant de l'urée en tant que substance précurseur de l'agent réducteur, l'additif (25) étant une solution aqueuse, de l'ammoniac libre étant utilisé comme substance (26) abaissant le point de congélation, l'ammoniac étant dissous dans la solution aqueuse et le rapport pondéral d'eau, d'urée et d'ammoniac étant choisi de telle sorte que le point de congélation soit abaissé d'au moins 10 Kelvin par rapport au point de congélation d'une solution d'urée aqueuse (AdBlue) usuelle dans le commerce pour les véhicules automobiles.
